# EUROPEAN PATENT APPLICATION

(11) **EP 0 682 247 A1**
(43) Date of publication of application: **15.11.1995**
(21) Application number: 95106313.0
(22) Date of filing: 27.04.1995
(51) Int. Cl.: G01N 27/30

(54) **Improvements in or relating to reference electrodes**

(30) Priority: 13.05.1994 GB 9409580; 26.05.1994 GB 9410606
(71) Applicant: Siemens Plessey Controls Limited, Poole, Dorset BH17 7ER (GB)
(72) Inventor: Birch, Brian Jeffrey, Chelverston, Northamptonshire NN9 6AW (GB); Thomas, Nigel John, Poole, Dorset BH17 8WD (GB); Atkinson, John Karl, Awbridge, Romsey, Hampshire SO51 0HL (GB); Cranny, Andrew William James, West End, Southampton SO3 3LZ (GB); Siuda, Przemyslaw Rafal,Dr, 44/100 GLIWICT (PL)
(74) Representative: Allen, Derek

(57) **Abstract**

A reference electrode comprising a substrate of insulative material, eg. alumina (1), a silver layer (2) supported on the substrate, a terminal region of said electrode comprising one portion of the silver layer, a silver halide layer (4) which is arranged to overlay another portion of the silver layer, an insulation layer, eg. ceramic or epoxy (3) which is arranged to mask a surface of the silver layer between the said one portion and the said silver halide layer, and a contact region (5) of the said electrode defined by a layer comprising a salt of the halide eg. KCl in polymer matrix which overlays the said silver halide layer, is fabricated using thick film techniques.

## Description

This invention relates to reference electrodes.

More especially the invention relates to reference electrodes for use in apparatus for measuring or monitoring the character or quality of liquid such as water for example. Such apparatus is described in our co-pending GB patent application number 9324663.5 to which attention is hereby directed. It is important that reference electrodes for use in water quality monitoring apparatus should have repeatable characteristics and it is also advantageous that they should be simple and reasonably inexpensive to manufacture.

Accordingly, it is an object of the present invention to provide a reference electrode suitable for use in water quality monitoring apparatus which has predictable characteristics and which may be easily manufactured.

According to the present invention, a reference electrode comprises a substrate of insulative material, a silver layer supported on the substrate, a terminal region of said electrode comprising one portion of the silver layer, a silver halide layer which is arranged to overlay another portion of the silver layer, an insulation layer which is arranged to mask a surface of the silver layer between the said one portion and the said silver halide layer, and a contact region of the said electrode defined by a layer comprising a salt of the halide which overlays the said silver halide layer.

In use of the reference electrode to facilitate water quality monitoring for example, an electrical connection would normally be made between the terminal region either directly or indirectly and the contact region comprising a salt of the halide, which contact region would normally be exposed to water the quality of which is to be monitored.

Advantageously an additional layer may be provided which comprises a mixture of the silver halide and the said salt, the additional layer being positioned between the silver halide layer and the layer comprising a salt of the halide.

This additional layer serves to provide a more linear junction to ions at an interface between the aforementioned two layers.

The halide of silver may be silver chloride.

The salt of the halide may be potassium chloride.

The substrate may be a ceramic made from alumina for example.

The insulative layer may be an epoxy resin or cermet material.

The halide salt may be contained within a polymeric matrix.

The electrode may be fabricated using thick film techniques.

The reference electrode may comprise a two terminal unitary device.

The reference electrode may form a part of water quality testing or monitoring apparatus.

Some embodiments of the invention will now be described by way of example only with reference to the accompanying drawings in which;
FIGURE 1 is a plan view of a reference electrode,
FIGURE 2 is a cross sectional view of the reference electrode shown in Figure 1,
FIGURE 3 is a plan view of an alternative reference electrode,
FIGURE 4 is a cross sectional view of the reference electrode shown in Figure 3, and
FIGURE 5 is a graph showing test results applied to a reference electrode fabricated in accordance with the present invention.

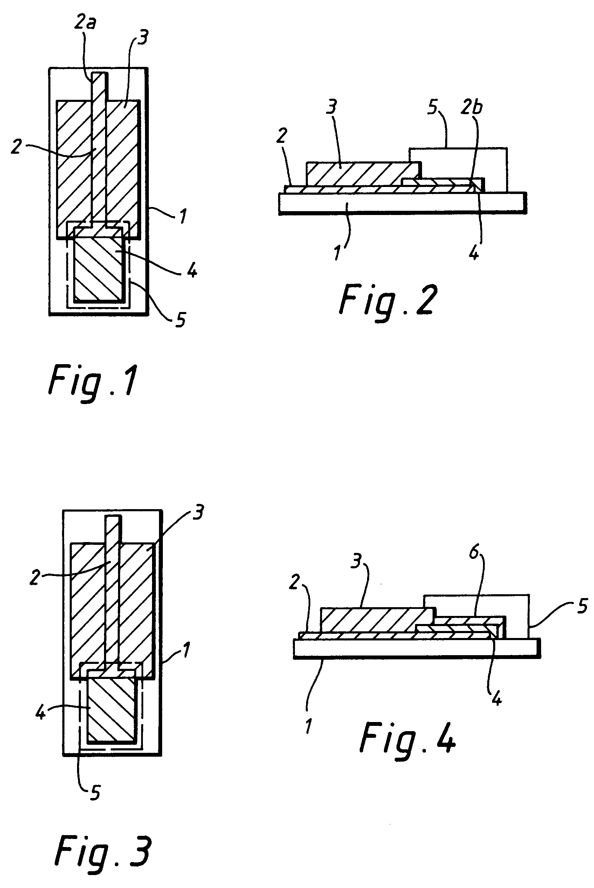

Referring now to Figures 1 to 4, wherein corresponding parts bear the same numerical designations, the basic layers which constitute a reference electrode are as follows. The reference electrode is supported on a suitable substrate material 1, which may be alumina ceramic for example, by the sequential printing (or by other means of deposition) of a number of specific functional layers of printable (or otherwise depositable) materials. Firstly, a silver layer 2 is deposited on the substrate 1, which layer forms a back contact of the reference electrode and provides a solderable interface region 2a for an electrical connection.

At one end of this silver layer 2 a silver halide layer 4, which in this example is silver chloride, is over printed such that it totally covers an end portion 2b of the underlying silver layer 2. An insulating layer of dielectric material 3, which is epoxy resin in this example, is subsequently printed over the length of the silver layer 2 in such a manner that it covers an overlap area between the silver halide layer 4 and the silver layer 2 whilst leaving the region 2a at the opposite end of the silver layer 2 free for future electrical connections. The purpose of the layer of dielectric material 3 is to mask the silver layer 2 from aqueous solutions in use of the reference electrode. Finally, a contact layer 5 of material which comprises a salt of the halide used for the layer 4 (eg. potassium chloride in this example), which salt is interspersed in a non-conductive medium which can be printed (or otherwise deposited), is coated over the silver halide layer 4 such that none of the silver halide layer 4 is exposed.

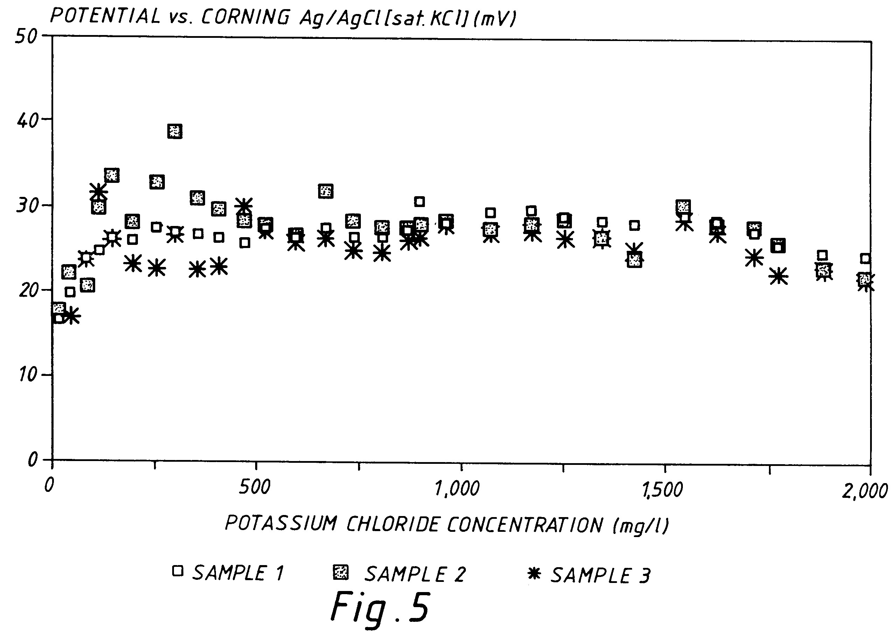

In accordance with one embodiment of the invention as shown in Figures 3 and 4, an additional interfacial layer 6 is provided which comprises a mixture of both the silver halide layer 4 and the halide salt contact layer 5. This additional layer 6 provides a more linear junction to ions at an interface between the layers 4 and 5. The practical effect of this can be seen from Figure 5, wherein reference electrode potentials, are plotted against potassium chloride concentration in solution, for three different sample reference electrodes and from this graph it will be appreciated that a low degree of variability in potential obtains over the dissolved salt concentration range investigated.

Various modifications may be made to the arrangement just before described without departing from the scope of the invention, for example it will be apparent that other halides such as bromide may be used and suitable alternative salts of the halide may also be chosen such as sodium for example.

Additionally, although in the foregoing embodiment the silver halide layer 4 is laid down before the layer of dielectric material 3, in an alternative embodiment the layer of dielectric material 3 may be deposited first and the silver halide layer 4 subsequently deposited so as partly to overlay the layer of dielectric material 3, and in this case the layer of dielectric material 3 may be a ceramic.

## Claims

1. A reference electrode comprising a substrate of insulative material, a silver layer supported on the substrate, a terminal region of said electrode comprising one portion of the silver layer, a silver halide layer which is arranged to overlay another portion of the silver layer, an insulation layer which is arranged to mask a surface of the silver layer between the said one portion and the said silver halide layer, and a contact region of the said electrode defined by a layer comprising a salt of the halide which overlays the said silver halide layer.

2. A reference electrode as claimed in Claim 1, wherein an additional layer is provided which comprises a mixture of the silver halide and the said salt, the additional layer being positioned between the silver halide layer and the layer comprising a salt of the halide.

3. A reference electrode as claimed in Claim 1 or Claim 2, wherein, the halide of silver is silver chloride.

4. A reference electrode as claimed in any preceding claim, wherein the salt of the halide is potassium chloride.

5. A reference electrode as claimed in any preceding claim, wherein the substrate is a ceramic made from alumina.

6. A reference electrode as claimed in any preceding claim, wherein the insulative layer is an epoxy resin or a cermet material.

7. A reference electrode as claimed in any preceding claim, wherein the halide salt is contained within a polymeric matrix.

8. A reference electrode as claimed in any preceding claim, wherein the electrode is fabricated using thick film techniques.

9. A reference electrode as claimed in any preceding claim, wherein the reference electrode comprises a two terminal unitary device.

10. Water quality monitoring or testing apparatus including a reference electrode as claimed in any preceding claim.
